# EUROPEAN PATENT SPECIFICATION

(11) **EP 4 170 197 B1**
(45) Date of publication and mention of the grant of the patent: **09.10.2024**
(21) Application number: 22201148.8
(22) Date of filing: 12.10.2022
(51) Int. Cl.: F16F 9/48, F16F 9/348, F16F 9/18

(54) **HYDRAULIC DAMPER WITH A HYDRAULIC COMPRESSION STOP ASSEMBLY**
HYDRAULISCHER DÄMPFER MIT EINER HYDRAULISCHEN DRUCKANSCHLAGANORDNUNG
AMORTISSEUR HYDRAULIQUE AVEC UN ENSEMBLE DE BUTÉE DE COMPRESSION HYDRAULIQUE

(30) Priority: 15.10.2021 CN 202111201930; 10.09.2022 US 202217942118
(43) Date of publication of application: 26.04.2023
(73) Proprietor: BeijingWest Industries Co., Ltd., Beijing 102400 (CN)
(72) Inventor: SARAPATA, Mateusz, 30-399 Kraków (PL); KASPRZYK, Dominik, 39-200 Debica (PL)
(74) Representative: Lukaszyk, Szymon

(56) References cited:
- DE-B- 1 028 438
- JP-A- 2014 231 879
- JP-A- S5 012 484
- SU-A1- 1 135 934
- US-A1- 2019 375 263

## Description

### Field of the Invention

The present disclosure relates to a hydraulic damper, in particular a motor vehicle suspension damper, comprising a main tube filed with working liquid; a piston assembly disposed slidably inside the main tube along an axis, attached to a piston rod led outside the damper through a sealed piston rod guide, dividing the tube into a rebound chamber and a compression chamber, provided with compression and rebound valve assemblies to control the flow of the working liquid passing between the rebound chamber and the compression chamber; a base valve assembly located at the end of the compression chamber, provided with compression and rebound valve assemblies to control the flow of the working liquid passing between the compression chamber and a compensation chamber; and at least one hydraulic compression stop assembly to increase damping forces at the end of the damper compression stroke, cooperating with a compression valve assembly and comprising a pin disposed slidably within the piston rod and biased to project an activating tip towards the compression chamber to increase damping of said compression valve assembly upon sliding inside the piston rod.

### Background of the Invention

Document JP2014231879 discloses a twin-tube hydraulic damper comprising a hydraulic stop assembly comprising a pin inserted into a chamber of a piston and having one end fixed to a base valve assembly and the other end side inserted into the piston rod. The pin has a support flange portion supported by the base valve and a large diameter shaft portion having a constant diameter smaller than that of the support flange portion, and a tapered shaft portion extending in the axial direction from the side opposite to the support flange portion. The orifice in the form of the gap between the small diameter hole of the tip rod and the pin is provided on the lower chamber side in the passage in the rod, having the narrowest passage area when the large-diameter shaft portion is aligned with the small-diameter hole portion in the axial direction, and the widest passage area when the small-diameter shaft portion is aligned with the small-diameter hole portion in the axial direction. The small-diameter hole and the pin change the passage area according to the displacement of the piston rod forming the passage area adjusting mechanism aligning the small diameter hole portion with the axial position of the small diameter shaft portion of the pin to maximize the passage area of the orifice.

Document DE1028438B discloses a hydraulic damper, comprising: a main tube filed with working liquid and extending along an axis between an open end and a closed end; a piston assembly slidably disposed inside the main tube, attached to a piston rod that extends outside the hydraulic damper through a sealed piston rod guide located at the open end, dividing the main tube into a rebound chamber and a compression chamber and configured to generate a damping force;a base valve assembly located at the closed end of the compression chamber and configured to control a flow of the working liquid between the compression chamber and a compensation chamber; and at least one compression stop assembly cooperating with a compression valve assembly and comprising a pin disposed slidably within the piston rod and biased to project an activating tip towards the compression chamber to increase damping of said compression valve assembly upon sliding inside the piston rod and to generate an additional damping force with said piston assembly at an end of a compression stroke; wherein said compression valve assembly comprises:at least one deflectable or floating disc covering compression flow passages.

As a compression stop assembly requires space for its operation, it is common to provide this space by decreasing a so called minimum bearing span of a damper that is the distance between a rebound stop and a main piston assembly. However this may exclude implementations of such dampers in suspension systems where piston rod is subjected to side loads (e.g. MacPherson struts), where a sufficient minimum bearing span is crucial for proper operation of the damper. It is thus desirable to reduce the space occupied by the compression stop assembly at the end of the damper compression stroke. Such a space reduction is also beneficial in terms of packaging and handling of the dampers.

It has been the object of the present disclosure to provide a hydraulic damper with a compression stop assembly, which would reduce operational length of the assembly, would be cost efficient and simple in manufacture and assembly, and which would provide versatile tuning properties for shaping the additional damping force.

### Summary of the Invention

The present invention provides a hydraulic damper. The hydraulic damper comprises a main tube filed with working liquid and extending along an axis between an open end and a closed end. The hydraulic damper also comprises a piston assembly slidably disposed inside the main tube, attached to a piston rod that extends outside the hydraulic damper through a sealed piston rod guide located at the open end, dividing the main tube into a rebound chamber and a compression chamber and configured to generate a damping force. The hydraulic damper also comprises a base valve assembly located at the closed end of the compression chamber and configured to control a flow of the working liquid between the compression chamber and a compensation chamber. The hydraulic damper also comprises at least one compression stop assembly cooperating with a compression valve assembly and comprising a pin disposed slidably within the piston rod and biased to project an activating tip towards the compression chamber to increase damping of said compression valve assembly upon sliding inside the piston rod and to generate an additional damping force with said piston assembly at an end of a compression stroke. The compression valve assembly comprises: at least one deflectable or floating disc covering compression flow passages and biased by a piston member slidable along said axis and abutting a retaining surface. The compression valve assembly also comprises a pressure chamber having one surface defined by a surface of said piston member abutting said retaining surface. The pin, upon sliding inside the piston rod, facilitates a flow of the working liquid from the compression chamber into said pressure chamber to generate a pressure on said surface of said piston member to increase a biasing load on said at least one deflectable or floating disc.

The present disclosure provides a damper having a compression valve assembly that comprises at least one deflectable or floating disc covering compression flow passages, and biased by a piston member slidable along said axis and normally abutting a retaining surface, and a pressure chamber having one surface defined by a surface of said piston member abutting said retaining surface, wherein said pin, upon sliding inside the piston rod, facilitates a flow of the working liquid from the compression chamber into said pressure chamber to generate a pressure on said surface of said piston member to increase biasing load on said at least one deflectable or floating disc.

In some embodiments, said compression valve assembly comprises at least one spring having a first surface biasing said at least one deflectable or floating disc, and a second surface biasing said piston member.

Therefore, in some embodiments, the piston member compresses the spring and increases its biasing load.

In some embodiments, said compression valve assembly cooperating with said at least one hydraulic compression stop assembly is a compression valve assembly of the piston assembly, and said pressure chamber is additionally defined by a guiding portion fixed on the piston rod, wherein the piston rod has at least one radial channel in fluid communication with said pressure chamber and normally disconnected from the compression chamber by the wall of the pin, wherein the pin has at least one axial channel in fluid communication with the compression chamber having an outlet distal to the activating tip of the pin normally closed by the wall of the piston rod, wherein upon sliding of the pin inside the piston rod along a predetermined distance said at least one axial channel of the pin is in fluid communication with said at least one radial channel of the piston rod to generate pressure on said surface of said piston member.

In some embodiments, said at least one axial channel has a form of a narrowed cross-section of said pin.

In some embodiments, said compression valve assembly cooperating with said at least one hydraulic compression stop assembly is installed within an adapter disposed between the base valve assembly and the compression chamber and comprising an axial opening for a flow of the working liquid through the base valve assembly between the compression chamber and the compensation chamber which is closable by the activating tip of the pin, and said pressure chamber is additionally defined by a guiding portion of said adapter, wherein the adapter has at least one radial channel in fluid communication with said pressure chamber and normally connected with the compression chamber, wherein said compression flow passages are disposed within a valve member fixed between said adapter and the main tube, wherein closing said axial opening by the activating tip and sliding of the pin inside the piston rod along a predetermined distance generates pressure on said surface of said piston member.

In some embodiments, said adapter comprises a number of axial flow passages surrounding said guiding portion, and said valve member has a number of rebound flow passages covered in the compression chamber by at least one deflective or floating intake disk provided with a number of flow passages that allow the working liquid to flow to said compression flow passages during the compression stroke of the damper.

In some embodiments, the pin is biased by a spring disposed within a chamber in the piston rod.

In some embodiments, the pin has an internal axial channel joining the compression chamber with said chamber in the piston rod.

### Brief description of drawings

The disclosure shall be described and explained below in connection with the attached drawings on which:
Fig. 1 illustrates a fragment of a vehicle suspension comprising a damper according to the present disclosure;
Fig. 2 is a schematic cross-sectional view of an embodiment of a twin-tube damper according to the present disclosure;
Fig. 3 is a schematic cross-sectional enlarged view of the damper shown in Fig. 2 illustrating both a hydraulic compression stop piston assembly and a hydraulic compression stop base valve assembly in an inactive state during the compression stroke;
Fig. 4 is a schematic cross-sectional view of the hydraulic compression stop piston assembly shown in Fig. 2 after activation;
Fig. 5 is a schematic cross-sectional, perspective view of the hydraulic compression stop piston assembly shown in Fig. 2 in an inactive state;
Fig. 6 is a schematic cross-sectional view of the hydraulic compression stop base valve assembly shown in Fig. 2 after activation;
Fig. 7 is a schematic cross-sectional, perspective view of the hydraulic compression stop base valve assembly shown in Fig. 2 in an inactive state;
Fig. 8 is a schematic cross-sectional, perspective view of the hydraulic compression stop base valve assembly shown in Fig. 2 after activation; and
Fig. 9 is a schematic cross-sectional view of the hydraulic compression stop base valve assembly shown in Fig. 2 in active state, and at the onset of the rebound stroke of the damper.

### Detailed description

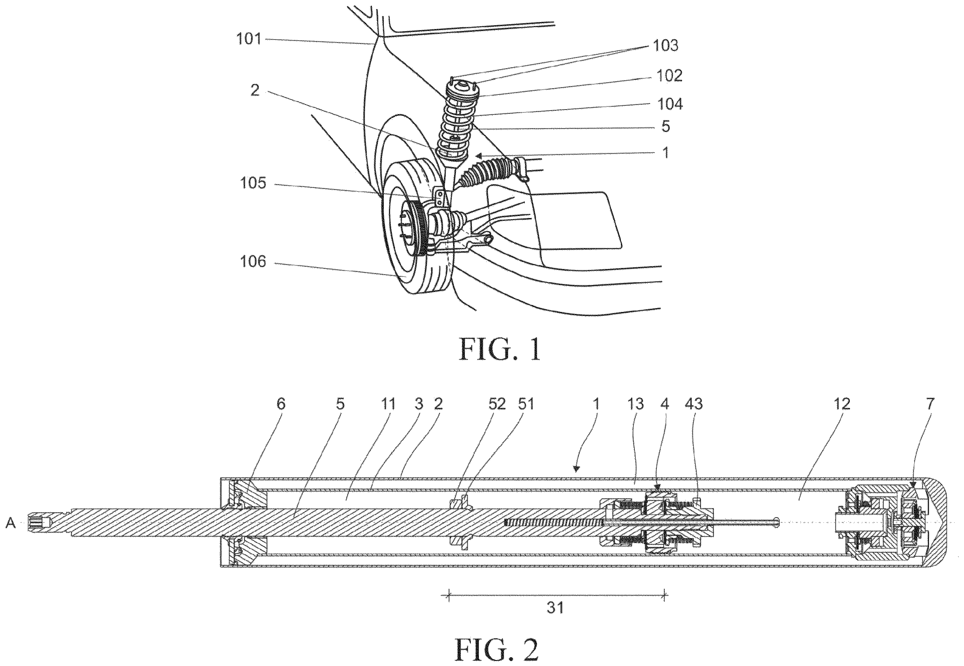

Fig. 1 schematically illustrates a fragment of an exemplary vehicle suspension comprising a damper 1 of the present disclosure attached to a vehicle chassis 101 by means of a top mount 102 and a number of screws 103 disposed on the periphery of the upper surface of the top mount 102. The top mount 102 is connected to a coil spring 104 and a piston rod 5 of the damper 1. The tube 2 of the damper 1 is connected to the steering knuckle 105 supporting the vehicle wheel 106.

Fig. 2 presents an embodiment of a twin-tube damper 1 according to the present disclosure. The damper 1 comprises an external tube 2 and a main tube 3 filled with viscous working liquid inside of which a movable piston assembly 4 is disposed. The piston assembly 4 is attached to the piston rod 5 led outside the damper 1 through a sealed piston rod guide 6 by means of a shoulder nut 43. The damper 1 is also provided with a base valve assembly 7 fixed at the other end of the main tube 3. The piston assembly 4 makes a sliding fit with the inner surface of the main tube 3 and divides the tube 3 into a rebound chamber 11 (between the piston assembly 4 and the piston rod guide 6) and a compression chamber 12 (between the piston assembly 4 and the base valve assembly 7). A compensation chamber 13 is located at the other side of the base valve assembly 7. A metal rebound stop 51 is clenched on a piston rod 5 and supports an elastomeric rebound bumper 52. The distance between the rebound bumper 52 and the piston assembly 4 defines a minimum bearing span 31 of the damper 1.

The term "compression" as used herein with reference to particular elements of the damper refers to these elements or parts of elements which are ad-jacent to or face the compression chamber 12 or, in a case of the working liquid flow direction, it refers to this flow direction that takes place during the compression stroke of the damper. Similarly the term "rebound" as used in this specification with reference to particular elements of the damper refers to these elements or these parts of particular elements which are adjacent to or face the rebound chamber 11 or, in a case of the working liquid flow direction, it refers to this flow direction that takes place during the rebound stroke of the damper.

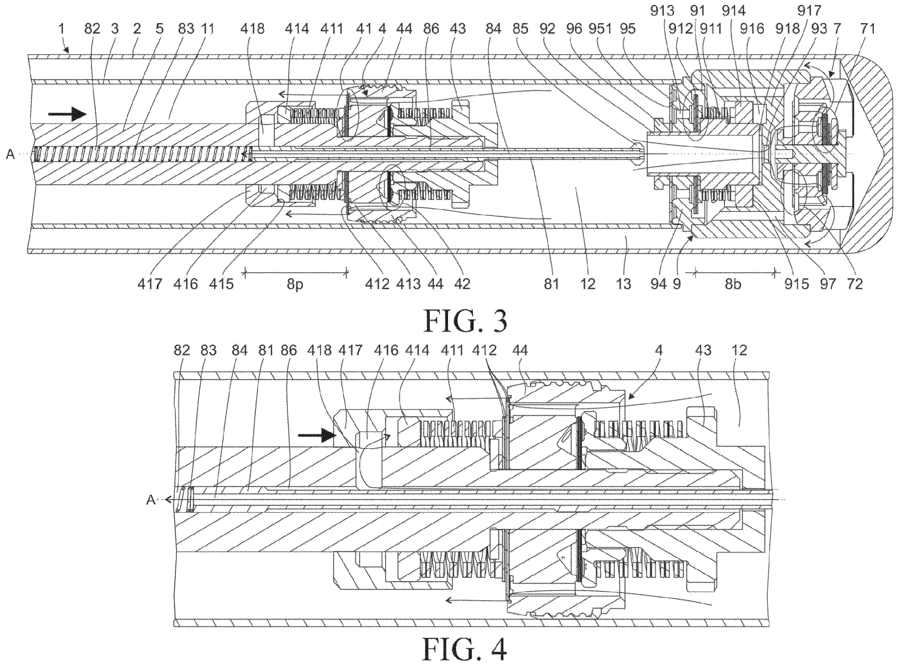

As shown in Fig. 3 the piston assembly 4 includes a first compression valve assembly 41 and a first rebound valve assembly 42. Each of the first com-pression and first rebound valve assemblies 41, 42 are configured to control the flow of working liquid passing between the rebound chamber 11 and the compression chamber 12 while the piston assembly 4 is in motion along an axis A and to generate a damping force opposing force applied to the piston rod 5 in corresponding compression and rebound directions. Also, the base valve assembly 7 includes a second compression valve assembly 71 and a second rebound valve assembly 72 to control the flow of working liquid passing between the compensation chamber 13 and the compression chamber 12, respectively, during rebound and compression stroke of the hydraulic damper 1. As it is well known to those skilled in the art, the valve assemblies 41, 42 and 71, 72 provide design parameters that may be used to shape desired characteristics of the hydraulic damper 1.

The damper 1 is further provided with two compression stop assemblies 8p and 8b to generate an additional damping force at the end of the compression stroke e.g. in order to avoid abrupt stop of the piston assembly 4. An activating component of both compression stop assemblies 8p and 8b is a pin 81 disposed slidably within an internal chamber 82 of the piston rod 5. The pin 81 is biased to project from the piston rod 5 towards the compression chamber 12 by a spring 83 disposed within the internal chamber 82. The pin 81 has an internal axial channel 84 joining the compression chamber 12 with the internal chamber 82 to provide venting and lubrication.

The compression stop assembly 8p is installed on the piston assembly 4 and cooperates with the first compression valve assembly 41 of the piston assembly 4. The first compression valve assembly 41 has a spring 411 having a first surface biasing four deflectable discs 412 covering compression flow passages 413 in the body 44 of the piston assembly 4. A second surface of the spring 411 biases a piston member 414 surrounding the piston rod 5 and slidable along the axis A. In an inactive state of the compression stop assembly 8p the piston member 414 abuts a retaining surface 415 of a guiding portion 417 fixed on the piston rod 5. The guiding portion 417 and the surface of the piston member 414 distal to the spring 411 define a pressure chamber 416. The piston rod 5 is provided with a number of equiangularly spaced radial channels 418 that may join the pressure chamber 416 with the compression chamber 12, as shall be explained later.

The base compression stop assembly 8b is installed on an adapter 9 fixed to the base valve assembly 7 and cooperates with a third compression valve assembly 91 of the adapter 9. The third compression valve assembly 91 has a spring 911 having a first surface biasing three deflectable discs 912 covering compression flow passages 913 in an annular valve member 94 fixed between the adapter 9 and the main tube 3. A second surface of the spring 911 biases a piston member 914 surrounding a sleeve member 92 and slidable along the axis A. The adapter 9 is further provided with a guiding portion 917 surrounding the piston member 914. In an inactive state of the base compression stop assembly 8b, the piston member 914 abuts a retaining surface 915 of the guiding portion 917. The guiding portion 917 and the surface of the piston member 914 distal to the spring 911 define a pressure chamber 916. The adapter 9 is provided with a number of equiangularly spaced radial channels 918 joining the pressure chamber 916 with the compression chamber 12. The sleeve member 92 passes through deflectable discs 912, the valve member 94, and an intake disk 95 and is fixed to the valve member 94 by a securing nut 96. The intake disk 95 is provided with a number of flow passages 951 that allow the working liquid to flow to the compression flow passages 913. The adapter is provided with an axial opening 93, that allows the working liquid to flow between the compression chamber 12 and the compensation chamber 13 that may be closed by an activating tip 85 of the pin 81, as shall be explained later.

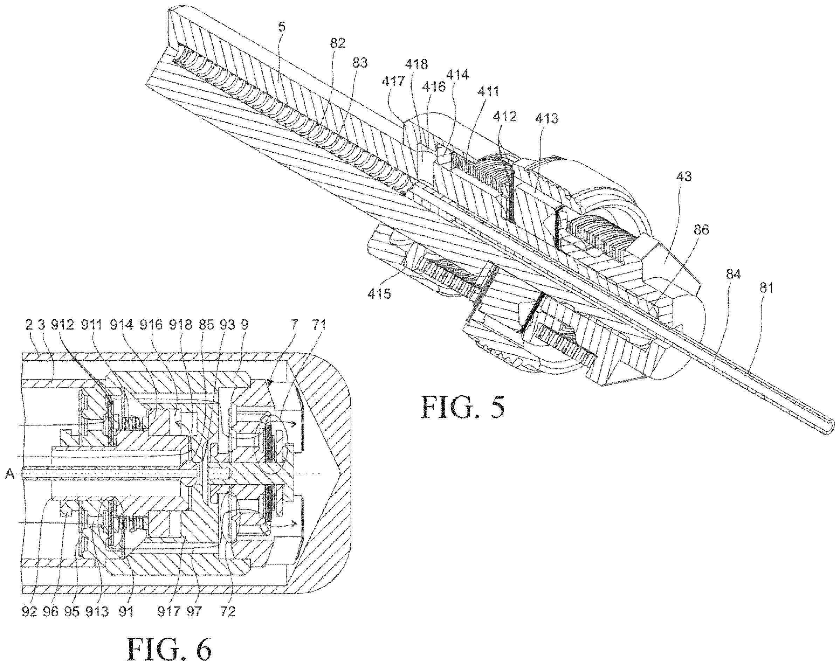

The pin 81 has an axial, annular channel 86 in fluid communication with the compression chamber 12 having an outlet distal to the activating tip 85 of the pin 81 normally closed by the wall of the piston rod 5. As shown in Fig. 3 and Fig. 5, in an inactive state of the compression stop assembly 8p, during the compression stroke of the damper 1, the axial channel 86, and thus also radial channels 418 are closed by the wall of the pin 81 and the working liquid flows, as indicated by arrows, from the compression chamber 12 to the rebound chamber 11 through the first compression valve assembly 41 of the piston assembly 4. In this configuration of the piston assembly 4 the spring 411 has a maximum working length and thus generates a predefined minimum pressure on the stack of deflectable discs 412 of the first compression valve assembly 41.

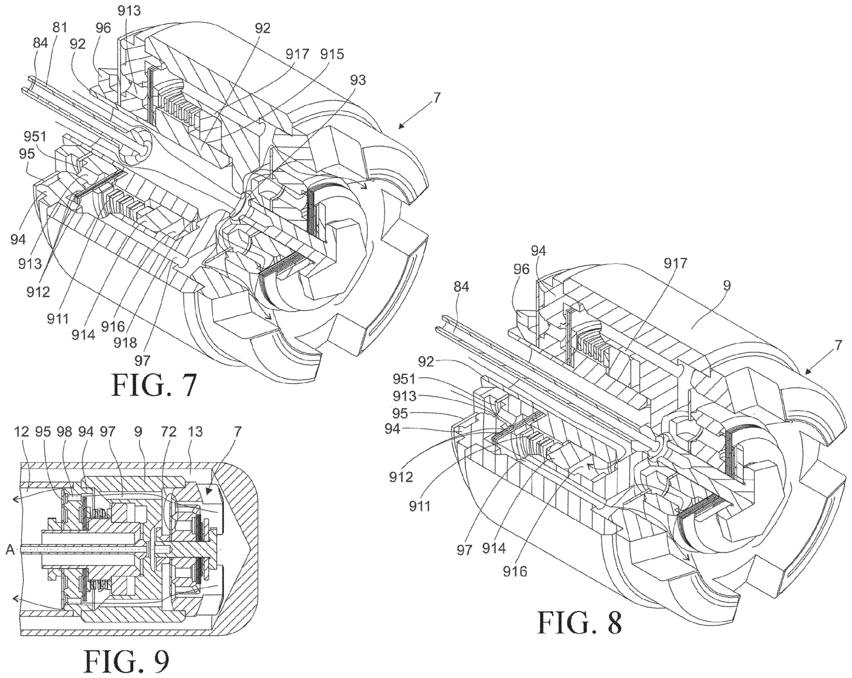

Similarly, as shown in Figs. 3 and 7, in an inactive state of the base compression stop assembly 8b, during the compression stroke of the damper 1, radial channel 918 of the adapter 9 is open but the pressure in the pressure chamber 916 is not generated, as the working liquid flows, as indicated by arrows, between the compression chamber 12 and the compensation chamber 13 through a sleeve member 92, the axial opening 93 of the adapter 9 and the second compression valve assembly 71 of the base valve assembly 7.

Each of the compression stop assemblies 8p, 8b cooperates with a corresponding valve assembly 41, 91. The piston compression stop assembly 8p cooperates with the first compression valve assembly 41, and the base compression stop assembly 8b cooperates with the third compression valve assembly 91.

As shown in Figs. 6, 8, and 9 at a certain position of the compression stroke the activating tip 85 of the pin 81 closes the axial opening 93 of the adapter and slides inside the piston rod 5 activating both the piston compression stop assembly 8p and the base compression stop assembly 8b.

As shown in Fig. 4, in the active state of the compression stop piston assembly 8p the pin 81 slides inside the internal chamber 82 of the piston rod 5 connecting the pressure chamber 416 with the compression chamber 12 through the axial channel 86 of the pin 81 and the radial channels 418 in the piston rod 5. Increased pressure in the pressure chamber 416 forces the piston member 414 to slide about the piston rod 5 and to compress the spring 411. This increases the reaction of the spring 411 and progressively increases the pressure on the stack of deflectable discs 412 of the first compression valve assembly 41. Therefore damping force generated by the first compression valve assembly 41 of the piston assembly 4 progressively increases.

As shown in Figs. 6, and 8, in the active state of the base compression stop assembly 8b, the axial opening 93 of the adapter 9 is closed and the working liquid flows, as indicated by arrows, to the pressure chamber 916 through the radial channels 918. Increased pressure in the pressure chamber 916 forces the piston member 914 to slide about the sleeve member 92 and to compress the spring 911. This increases the reaction of the spring 911 and progressively increases the pressure on the stack of deflectable discs 912 of the third compression valve assembly 91. As indicated by arrows in the active state of the compression stop base valve assembly 8b the working liquid flows from the compression chamber 12 to the compensation chamber 13 through the flow passages 951 in the intake disk 95, compression flow passages 913 in the valve member 94, gap between the valve member 94 and the stack of deflectable discs 912 and finally to the second compression valve assembly 71 of the base valve assembly 7, through a number of equiangularly spaced axial flow passages 97 surrounding the guiding portion 917 of the adapter 9.

As shown in Fig. 9, at the onset of the rebound stroke, when the axial opening 93 of the adapter 9 is closed, the working liquid flows initially from the com-pensation chamber 13 to the compression chamber 12 through the second rebound valve assembly 72 of the base valve assembly 7, then through flow passages 97 and finally through a number of equiangularly spaced, radially distal rebound flow passages 98 provided in the valve member 94, deflecting the intake disk 95. When the piston assembly 4 moves into the rebound chamber 11, the pin 81 biased by the spring 83 slides outside the piston rod 5, and eventually the activating tip 85 opens the axial opening 93 in the adapter 9.

The above embodiments of the present disclosure are merely exemplary. The figures are not necessarily to scale, and some features may be exaggerated or minimized. These and other factors however should not be considered as limiting the spirit of the disclosure, the intended scope of protection of which is indicated in appended claims.

### List of reference numerals

- 1.: damper
11. rebound chamber
12. compression chamber
13. compensation chamber
- 2.: external tube
- 3.: main tube
31. minimum bearing span
- 4.: piston assembly
41. first compression valve assembly
411. spring
412. deflectable disc
413. compression flow passage
414. piston member
415. retaining surface
416. pressure chamber
417. guiding portion
418. radial channel
42. first rebound valve assembly
43. shoulder nut
44. body
- 5.: piston rod
51. rebound stop
52. rebound bumper
- 6.: piston rod guide
- 7.: base valve assembly
71. second compression valve assembly
72. second rebound valve assembly
- 8b.: base compression stop assembly
- 8p.: piston compression stop assembly
81. pin
82. internal chamber
83. spring
84. internal axial channel
85. activating tip
86. axial channel
- 9.: adapter
91. third compression valve assembly
911. spring
912. deflectable disc
913. compression flow passage
914. piston member
915. retaining surface
916. pressure chamber
917. guiding portion
918. radial channel
92. sleeve member
93. axial opening
94. valve member
95. intake disk
951. flow passage
96. securing nut
97. flow passage
98. rebound flow passage
- 101.: vehicle chassis
- 102.: top mount
- 103.: screw
- 104.: spring
- 105.: steering knuckle
- 106.: vehicle wheel

## Claims

1. A hydraulic damper (1), comprising:
a main tube (3) filed with working liquid and extending along an axis (A) between an open end and a closed end;
a piston assembly (4) slidably disposed inside the main tube (3), attached to a piston rod (5) that extends outside the hydraulic damper (1) through a sealed piston rod guide (6) located at the open end, dividing the main tube (3) into a rebound chamber (11) and a compression chamber (12) and configured to generate a damping force;
a base valve assembly (7) located at the closed end of the compression chamber (12) and configured to control a flow of the working liquid between the compression chamber (12) and a compensation chamber (13); and
at least one compression stop assembly (8p, 8b) cooperating with a compression valve assembly (41, 91) and comprising a pin (81) disposed slidably within the piston rod (5) and biased to project an activating tip (85) towards the compression chamber (12) to increase damping of said compression valve assembly (41, 91) upon sliding inside the piston rod (5) and to generate an additional damping force with said piston assembly (4) at an end of a compression stroke;
wherein said compression valve assembly (41, 91) comprises:
at least one deflectable or floating disc (412, 912) covering compression flow passages (413, 913) and biased by a piston member (414, 914) slidable along said axis (A) and abutting a retaining surface (415, 915), and
a pressure chamber (416, 916) having one surface defined by a surface of said piston member (414, 914) abutting said retaining surface (415, 915); and
wherein said pin (81), upon sliding inside the piston rod (5), facilitates a flow of the working liquid from the compression chamber (12) into said pressure chamber (416, 916) to generate a pressure on said surface of said piston member (414, 914) to increase a biasing load on said at least one deflectable or floating disc (412, 912).

2. The hydraulic damper (1) according to Claim 1, wherein the piston assembly (4) includes compression and rebound valve assemblies (41, 42) to control the flow of working liquid passing between the rebound chamber (11) and the compression chamber (12) to generate the damping force.

3. The hydraulic damper (1) according to Claim 1 or 2, wherein said compression valve assembly (41) comprises at least one spring (411, 911) having a first surface biasing said at least one deflectable or floating disc (412, 912), and a second surface biasing said piston member (414, 914).

4. The hydraulic damper (1) according to any one of Claims 1 to 3, wherein said compression valve assembly (41) cooperating with said at least one compression stop assembly (8p) includes a compression valve assembly of the piston assembly (4), and said pressure chamber (416) is additionally defined by a guiding portion (417) fixed on the piston rod (5),
wherein the piston rod (5) has at least one radial channel (418) in fluid communication with said pressure chamber (416) and normally disconnected from the compression chamber (12) by a wall of the pin (81),
wherein the pin (81) has at least one axial channel (86) in fluid communication with the compression chamber (12) having an outlet distal to the activating tip (85) of the pin (81) normally closed by the wall of the piston rod (5),
wherein said compression flow passages (413) are disposed within the piston assembly (4), and
wherein upon sliding of the pin (81) inside the piston rod (5) along a predetermined distance said at least one axial channel (86) of the pin (81) is in fluid communication with said at least one radial channel (418) of the piston rod (5) to generate pressure on said surface of said piston member (414).

5. The hydraulic damper (1) according to Claim 4, wherein said at least one axial channel (86) has a form of a narrowed cross-section of said pin (81).

6. The hydraulic damper (1) according to any one of Claims 1 to 3, wherein said compression valve assembly (91) cooperating with said at least one compression stop assembly (8b) is installed within an adapter (9) disposed between the base valve assembly (7) and the compression chamber (12) and comprising an axial opening (93) for a flow of the working liquid through the base valve assembly (7) between the compression chamber (12) and the compensation chamber (13) which is closable by the activating tip (85) of the pin (81), and said pressure chamber (916) is additionally defined by a guiding portion (917) of said adapter (9), wherein the adapter (9) has at least one radial channel (918) in fluid communication with said pressure chamber (916) and normally connected with the compression chamber (12),
wherein said compression flow passages (913) are disposed within a valve member (94) fixed between said adapter (9) and the main tube (3),
wherein closing said axial opening (93) by the activating tip (85) and sliding of the pin (81) inside the piston rod (5) along a predetermined distance generates pressure on said surface of said piston member (914).

7. The hydraulic damper (1) according to Claim 6, wherein said adapter (9) comprises a number of axial flow passages (97) surrounding said guiding portion (917), and said valve member (94) has a number of rebound flow passages (98) covered in the compression chamber (12) by at least one deflective or floating intake disk (95) provided with a number of flow passages (951) that allow the working liquid to flow to said compression flow passages (913) during the compression stroke of the hydraulic damper (1).

8. The hydraulic damper (1) according to any one of Claims 1 to 7, wherein the pin (81) is biased by a spring (83) disposed within an internal chamber (82) in the piston rod (5).

9. The hydraulic damper (1) according to Claim 8, wherein the pin (81) has an internal axial channel (84) joining the compression chamber (12) with said internal chamber (82) in the piston rod (5).

10. The hydraulic damper (1) according to any one of Claims 1 to 9, wherein the hydraulic damper (1) is a motor vehicle suspension damper.

## Patentansprüche

1. Ein hydraulischer Dämpfer (1), bestehend aus:
einem Hauptrohr (3), das mit Arbeitsflüssigkeit gefüllt ist und sich entlang einer Achse (A) zwischen einem offenen und einem geschlossenen Ende erstreckt;
einer Kolbenbaugruppe (4), die gleitend im inneren des Hauptrohrs (3) angeordnet und an einer Kolbenstange (5) befestigt ist, die sich durch eine abgedichtete Kolbenstangenführung (6), die sich am offenen Ende befindet, aus dem hydraulischen Dämpfer (1) heraus erstreckt und das Hauptrohr (3) in eine Rückstoßkammer (11) und eine Kompressionskammer (12) unterteilt und so gestaltet ist, dass sie eine Dämpfungskraft erzeugt;
einer Bodenventilbaugruppe (7), die sich am geschlossenen Ende der Kompressionskammer (12) befindet und so konfiguriert ist, dass sie einen Fluss der Arbeitsflüssigkeit zwischen der Kompressionskammer (12) und einer Ausgleichskammer (13) steuert; und
mindestens einer Kompressionsanschlagbaugruppe (8p, 8b), die mit einer Kompressionsventilbaugruppe (41, 91) zusammenwirkt und einen Stift (81) umfasst, der gleitend innerhalb der Kolbenstange (5) angeordnet und so vorgespannt ist, dass er eine Aktivierungsspitze (85) in Richtung der Kompressionskammer (12) vorsteht, um die Dämpfung der Kompressionsventilbaugruppe (41, 91) beim Gleiten innerhalb der Kolbenstange (5) zu erhöhen und eine zusätzliche Dämpfungskraft mit der Kolbenbaugruppe (4) an einem Ende eines Kompressionshubs zu erzeugen;
wobei die Kompressionsventilbaugruppe (41, 91) aus Folgendem besteht:
mindestens einer ablenkbaren oder schwimmenden Scheibe (412, 912), die Kompressionsströmungsdurchgänge (413, 913) abdeckt und durch ein Kolbenelement (414, 914) vorgespannt ist, das entlang der Achse (A) verschiebbar ist und an einer Haltefläche (415, 915) anliegt, und
einer Druckkammer (416, 916) mit einer Fläche, die durch eine an der Haltefläche (415, 915) anliegende Fläche des Kolbenelements (414, 914) definiert ist; und
wobei der Stift (81) beim Gleiten innerhalb der Kolbenstange (5) einen Fluss der Arbeitsflüssigkeit aus der Kompressionskammer (12) in die Druckkammer (416, 916) ermöglicht, um einen Druck auf die Oberfläche des Kolbenelements (414, 914) zu erzeugen, um eine Vorspannkraft auf die mindestens eine ablenkbare oder schwimmende Scheibe (412, 912) zu erhöhen.

2. Der hydraulische Dämpfer (1) nach Anspruch 1, wobei die Kolbenbaugruppe (4) Kompressions- und Rückstoßventilbaugruppen (41, 42) enthält, um den Fluss der Arbeitsflüssigkeit zu steuern, die zwischen der Rückstoßkammer (11) und der Kompressionskammer (12) fließt, um die Dämpfungskraft zu erzeugen.

3. Der hydraulische Dämpfer (1) nach Anspruch 1 oder 2, wobei die Kompressionsventilbaugruppe (41) mindestens eine Feder (411, 911) mit einer ersten Fläche, die die mindestens eine ablenkbare oder schwimmende Scheibe (412, 912) vorspannt, und einer zweiten Fläche, die das Kolbenelement (414, 914) vorspannt, umfasst.

4. Der hydraulische Dämpfer (1) nach einem der Ansprüche 1 bis 3, **dadurch gekennzeichnet, dass** die mit der mindestens einen Kompressionsanschlagbaugruppe (8p) zusammenwirkende Kompressionsventilbaugruppe (41) eine Kompressionsventilbaugruppe der Kolbenbaugruppe (4) umfasst und die Druckkammer (416) zusätzlich durch einen an der Kolbenstange (5) befestigten Führungsabschnitt (417) begrenzt ist,
wobei die Kolbenstange (5) mindestens einen radialen Kanal (418) aufweist, der in Flüssigkeitsverbindung mit der Druckkammer (416) steht und normalerweise durch eine Wand des Stifts (81) von der Kompressionskammer (12) getrennt ist,
wobei der Stift (81) mindestens einen axialen Kanal (86) in Flüssigkeitsverbindung mit der Kompressionskammer (12) aufweist, die einen Auslass distal zur Aktivierungsspitze (85) des Stifts (81) hat, der normalerweise durch die Wand der Kolbenstange (5) verschlossen ist,
wobei die Kompressionsströmungsdurchgänge (413) innerhalb der Kolbenbaugruppe (4) angeordnet sind, und
wobei beim Gleiten des Stifts (81) innerhalb der Kolbenstange (5) über eine vorbestimmte Strecke der mindestens eine axiale Kanal (86) des Stifts (81) in Flüssigkeitsverbindung mit dem mindestens einen radialen Kanal (418) der Kolbenstange (5) steht, um Druck auf die Oberfläche des Kolbenelements (414) zu erzeugen.

5. Der hydraulische Dämpfer (1) nach Anspruch 4, wobei der mindestens eine axiale Kanal (86) die Form eines verengten Querschnitts des Stifts (81) hat.

6. Der hydraulische Dämpfer (1) nach einem der Ansprüche 1 bis 3, wobei die mit der mindestens einen Kompressionsanschlagbaugruppe (8b) zusammenwirkende Kompressionsventilbaugruppe (91) in einem Adapter (9) eingebaut ist, der zwischen der Bodenventilbaugruppe (7) und der Kompressionskammer (12) angeordnet ist und eine axiale Öffnung (93) für einen Durchfluss der Arbeitsflüssigkeit durch die Bodenventilbaugruppe (7) zwischen der Kompressionskammer (12) und der Ausgleichskammer (13) aufweist, die durch die Aktivierungsspitze (85) des Stifts (81) verschließbar ist, und die Druckkammer (916) zusätzlich durch einen Führungsabschnitt (917) des Adapters (9) definiert ist, wobei der Adapter (9) mindestens einen radialen Kanal (918) aufweist, der in Flüssigkeitsverbindung mit der Druckkammer (916) steht und normalerweise mit der Kompressionskammer (12) verbunden ist,
wobei die Kompressionsströmungsdurchgänge (913) innerhalb eines Ventilelements (94) angeordnet sind, das zwischen dem Adapter (9) und dem Hauptrohr (3) befestigt ist,
wobei das Schließen der axialen Öffnung (93) durch die Aktivierungsspitze (85) und das Gleiten des Stifts (81) innerhalb der Kolbenstange (5) über eine vorbestimmte Strecke Druck auf die Oberfläche des Kolbenelements (914) erzeugt.

7. Der hydraulische Dämpfer (1) nach Anspruch 6, wobei der Adapter (9) eine Anzahl von axialen Strömungsdurchgängen (97) umfasst, die den Führungsabschnitt (917) umgeben, und das Ventilelement (94) eine Anzahl von Rückstoßströmungsdurchgängen (98) aufweist, die in der Kompressionskammer (12) durch mindestens eine ablenkende oder schwimmende Einlassscheibe (95) abgedeckt sind, die mit einer Anzahl von Strömungsdurchgängen (951) versehen ist, die es der Arbeitsflüssigkeit ermöglichen, während des Kompressionshubs des hydraulischen Dämpfers (1) zu den Kompressionsströmungsdurchgängen (913) zu fließen.

8. Der hydraulische Dämpfer (1) nach einem der Ansprüche 1 bis 7, wobei der Stift (81) durch eine Feder (83) vorgespannt ist, die in einer Innenkammer (82) in der Kolbenstange (5) angeordnet ist.

9. Der hydraulische Dämpfer (1) nach Anspruch 8, wobei der Stift (81) einen inneren axialen Kanal (84) aufweist, der die Kompressionskammer (12) mit der Innenkammer (82) in der Kolbenstange (5) verbindet.

10. Der hydraulische Dämpfer (1) nach einem der Ansprüche 1 bis 9, wobei der hydraulische Dämpfer (1) ein Aufhängungsdämpfer für Kraftfahrzeuge ist.

## Revendications

1. Un amortisseur hydraulique (1), comprenant:
un tube principal (3) rempli de liquide de travail et s'étendant le long d'un axe (A) entre une extrémité ouverte et une extrémité fermée;
un ensemble piston (4) disposé de manière coulissante à l'intérieur du tube principal (3), fixé à une tige de piston (5) qui s'étend à l'extérieur de l'amortisseur hydraulique (1) à travers un guide de tige de piston scellé (6) situé à l'extrémité ouverte, divisant le tube principal (3) en une chambre de détente (11) et une chambre de compression (12) et configuré pour générer une force d'amortissement;
un ensemble soupape de base (7) situé à l'extrémité fermée de la chambre de compression (12) et configuré pour contrôler un flux de liquide de travail entre la chambre de compression (12) et une chambre de compensation (13);
et au moins un ensemble butée de compression (8p, 8b) coopérant avec un ensemble soupape de compression (41, 91) et comprenant une goupille (81) disposée de manière coulissante à l'intérieur de la tige de piston (5) et sollicitée pour projeter une pointe d'activation (85) vers la chambre de compression (12) afin d'augmenter l'amortissement dudit ensemble soupape de compression (41, 91) lors du glissement à l'intérieur de la tige de piston (5) et de générer une force d'amortissement supplémentaire avec ledit ensemble piston (4) à la fin d'une course de compression;
dans lequel ledit ensemble soupape de compression (41, 91) comprend:
au moins un disque déflectable ou flottant (412, 912) couvrant les passages à flux de compression (413, 913) et sollicité par un élément de piston (414, 914) coulissant le long dudit axe (A) et butant contre une surface de retenue (415, 915), et
une chambre de pression (416, 916) ayant une surface définie par une surface de l'élément de piston (414, 914) butant contre ladite surface de retenue (415, 915); et
dans lequel ladite goupille (81), en glissant à l'intérieur de la tige de piston (5), facilite l'écoulement du liquide de travail de la chambre de compression (12) dans ladite chambre de pression (416, 916) pour générer une pression sur ladite surface dudit élément de piston (414, 914) afin d'augmenter une charge de sollicitation sur ledit au moins un disque déflectable ou flottant (412, 912).

2. L'amortisseur hydraulique (1) selon la revendication 1, dans lequel l'ensemble piston (4) comprend des ensembles valves de compression et de détente (41, 42) pour contrôler le flux de liquide de travail passant entre la chambre de détente (11) et la chambre de compression (12) pour générer la force d'amortissement.

3. L'amortisseur hydraulique (1) selon la revendication 1 ou 2, dans lequel ledit ensemble soupape de compression (41) comprend au moins un ressort (411, 911) ayant une première surface sollicitant ledit au moins un disque déflectable ou flottant (412, 912), et une seconde surface sollicitant ledit élément de piston (414, 914).

4. L'amortisseur hydraulique (1) selon l'une quelconque des revendications 1 à 3, dans lequel ledit ensemble soupape de compression (41) coopérant avec ledit au moins un ensemble butée de compression (8p) comprend un ensemble soupape de compression de l'ensemble piston (4), et ladite chambre de pression (416) est en outre définie par une partie de guidage (417) fixée sur la tige de piston (5),
dans laquelle la tige de piston (5) a au moins un canal radial (418) en communication fluidique avec ladite chambre de pression (416) et normalement déconnecté de la chambre de compression (12) au moyen d'une paroi de la goupille (81),
dans lequel la goupille (81) a au moins un canal axial (86) en communication fluidique avec la chambre de compression (12) ayant une sortie distale par rapport à la pointe d'activation (85) de la goupille (81) normalement fermée par la paroi de la tige de piston (5),
dans laquelle lesdits passages à flux de compression (413) sont disposés à l'intérieur de l'ensemble piston (4), et
dans lequel, lors du glissement de la goupille (81) à l'intérieur de la tige de piston (5) sur une distance prédéterminée, ledit au moins un canal axial (86) de la goupille (81) est en communication fluide avec ledit au moins un canal radial (418) de la tige de piston (5) afin de générer une pression sur ladite surface dudit élément de piston (414).

5. L'amortisseur hydraulique (1) selon la revendication 4, dans lequel ledit au moins un canal axial (86) a la forme d'une section transversale rétrécie de ladite goupille (81).

6. L'amortisseur hydraulique (1) selon l'une quelconque des revendications 1 à 3, dans lequel ledit ensemble soupape de compression (91) coopérant avec ledit au moins un ensemble butée de compression (8b) est installé dans un adaptateur (9) disposé entre l'ensemble soupape de base (7) et la chambre de compression (12) et comprenant une ouverture axiale (93) pour un écoulement du liquide de travail à travers l'ensemble soupape de base (7) entre la chambre de compression (12) et la chambre de compensation (13), qui peut être fermée par la pointe d'activation (85) de la goupille (81), et ladite chambre de pression (916) est en outre définie par une partie de guidage (917) dudit adaptateur (9), dans laquelle l'adaptateur (9) a au moins un canal radial (918) en communication fluidique avec ladite chambre de pression (916) et normalement relié à la chambre de compression (12),
dans laquelle lesdits passages à flux de compression (913) sont disposés à l'intérieur d'un élément de soupape (94) fixé entre ledit adaptateur (9) et le tube principal (3),
dans lequel la fermeture de ladite ouverture axiale (93) par la pointe d'activation (85) et le glissement de la goupille (81) à l'intérieur de la tige de piston (5) sur une distance prédéterminée génère une pression sur ladite surface dudit élément de piston (914).

7. L'amortisseur hydraulique (1) selon la revendication 6, dans lequel ledit adaptateur (9) comprend un certain nombre de passages à flux axial (97) entourant ladite partie de guidage (917), et ledit élément de soupape (94) a un certain nombre de passages à flux de détente (98) couverts dans la chambre de compression (12) par au moins un disque d'admission déflectif ou flottant (95) pourvu d'un certain nombre de passages à flux (951) qui permettent au liquide de travail de s'écouler vers lesdits passages à flux de compression (913) pendant la course de compression de l'amortisseur hydraulique (1).

8. L'amortisseur hydraulique (1) selon l'une des revendications 1 à 7, dans lequel la goupille (81) est sollicitée par un ressort (83) disposé dans une chambre interne (82) de la tige de piston (5).

9. L'amortisseur hydraulique (1) selon la revendication 8, dans lequel la goupille (81) présente un canal axial interne (84) reliant la chambre de compression (12) à ladite chambre interne (82) dans la tige de piston (5).

10. L'amortisseur hydraulique (1) selon l'une des revendications 1 à 9, dans lequel l'amortisseur hydraulique (1) est un amortisseur de suspension de véhicule automobile.
